# EUROPEAN PATENT APPLICATION

(11) **EP 2 690 332 A1**
(43) Date of publication of application: **29.01.2014**
(21) Application number: 13177640.3
(22) Date of filing: 23.07.2013
(51) Int. Cl.: F16K 31/06, B67C 3/28

(54) **Choke valve for adjusting the flow of a filling fluid for a filling machine equipped with such valve**

(30) Priority: 26.07.2012 IT MI20121312
(71) Applicant: OCME S.r.l., 43122 Parma (PR) (IT)
(72) Inventor: Gatteschi, Emanuele, 43100 PARMA (IT)
(74) Representative: Lotti, Giorgio

(57) **Abstract**

Choke valve (10) for adjusting the flow of a filling fluid of the type comprising:
- a tubular element (11) which defines a tract of fixed duct (50) in its inside; and
- a mobile body (14) inside said fixed duct (50) between an upstream abutment (12) and a downstream one (26); wherein
- said mobile body (14) and said abutments are configured so that when said mobile body (14) rests against said downstream abutment (26) a first fluid flow occurs and when said mobile body (14) rests against said upstream abutment (12) a second fluid flow occurs;
- said rest position of said mobile body (14) against said downstream abutment (26) being spontaneous; said rest position of said mobile body (14) against said upstream abutment (12) being forced;
- said first fluid flow being greater than said second fluid flow.

## Description

The present invention relates to a choke valve for adjusting the flow of a filling liquid of a type that can be installed on a machine for filling bottles, flasks, cans, jars or other containers in general.

The filling fluids dispensed can be of a more or less creamy alimentary nature, such as milk or drinks in general, but also alimentary oils, or other types of fluid such as lubricating oils, detergents or suchlike. In the industrial process of filling with liquids it is desirable to be able to fill containers of varying capacities.

In fact, it must be possible for the speed of filling to be initially reduced, then increased and finally reduced again.

In this way, the intermediate filling phase is speeded up so as to reduce times; filling begins slowly in order to limit the formation of foam and ends slowly again in order to dose more precisely the correct amount of fluid to be placed in the container.

Various patents exist, in which are described known valves assembled in filling machines capable of varying the flow of the liquid to be bottled.

In particular these valves, inserted in the duct in which the fluid to be dispensed flows, comprise a mobile body and an abutment located downstream of the mobile body in relation to the fluid's direction of feed.

In these embodiments, the mobile body identifies a minimum-flow position, in which it "rests" against the abutment, and a maximum-flow position in which the mobile body is kept raised "against the current" in relation to the abutment.

The movement of the mobile body and its standing in a raised position against the current can be controlled in a magnetic manner.

The above-described known solutions have a few drawbacks.

A first drawback lies in the fact that in the condition of maximum flow, a condition envisaged for the major part of the duration of the filling operations, the mobile body must be supported raised so as to overcome the current of fluid which tends to push it towards the abutment.

This condition requires a high energy input for periods of time comparable to the entire filling time.

In fact, filling at reduced flow is performed only at the end of the cycle for very short periods.

Another drawback lies in the control of this raised position.

In fact, if the nature of the fluid to be dispensed varies, the energy required to keep the mobile body in a raised position may vary, making it difficult to keep the mobile body firmly in this raised position.

The aim of the present invention is to create a choke valve to adjust the flow of a filling fluid alternative to those known and capable of resolving the above-mentioned drawbacks of the known art in an extremely simple, inexpensive and particularly functional manner. Another aim is to create a choke valve to adjust the flow of a filling fluid and a filling machine equipped with said filling valve in which the input of energy is not required under maximum flow condition.

Yet another aim is to create a choke valve to adjust the flow of a filling fluid and a filling machine equipped with said valve in which it is possible to control and firmly maintain the raised position of the mobile body regardless of the nature of the fluid to be dispensed.

These aims according to the present invention are achieved by creating a choke valve to adjust the flow of a filling fluid and a filling machine equipped with this valve as described in claims 1 and 10.

Further characteristics of the invention are described in the dependent claims.

The characteristics and advantages of a choke valve to adjust the flow of a filling fluid and a filling machine equipped with said valve according to the present invention will emerge more clearly from the following non-exhaustive description, given by way of example, with reference to the accompanying schematic drawings in which:

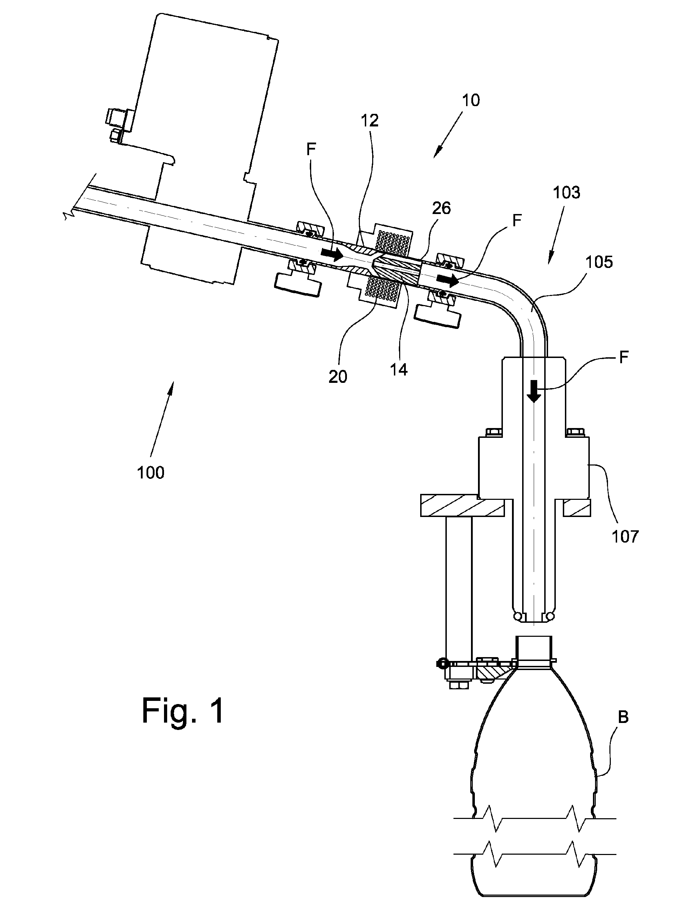

- Figure 1 shows, in a partially section side view, an embodiment of a filling machine equipped with the choke valve according to the present invention;
- Figure 2 shows schematically and in cross-section the choke valve shown in Figure 1 in the maximum flow configuration;
- Figure 3 shows schematically and in cross-section the choke valve shown in Figure 1 in the minimum flow configuration;
- Figure 4 shows in cross-section an embodiment of the mobile body of the choke valve shown in the preceding Figures; and
- Figures 5 and 6 show front and rear perspective views of the mobile body shown in cross-section in Figure 4. With reference to the Figures, 10 shows an embodiment of a choke valve according to the present invention to adjust the flow of a filling fluid and 100 shows a filling machine equipped with said valve 10.

In the present description, the expressions "upstream" and "downstream" refer to the direction of flow of the filling liquid in the choke valve, a direction shown in schematic form in the Figures by Arrows F/f, depending on the flow rate.

For example, the liquids that can be dispensed with the present valve are milk or drinks in general, but also alimentary oils or other types of fluid such as lubricating oils, detergents or suchlike.

The filling machine 100 can be used to fill bottles, packets, flasks, cans, jars or other containers with filling liquids.

The machine 100 can be provided with one or more dispensing channels 103 arranged to dispense the chosen filling liquid or, more generally, fluid. Each dispensing channel 103 forms internally a duct 105 through which the filling fluid can pass. The duct 105 terminates with a dispensing nozzle 107 arranged to expel the filling fluid and direct it into the bottle B or other container to be filled.

The nozzle 107 is in its turn equipped with a flow opening and closing valve.

Along the duct 105, upstream of the dispensing nozzle 107, at least one choke valve 10 is arranged, independent from said flow opening and closing valve and arranged so as to adjust the flow of the filling fluid between a condition of maximum flow and minimum flow.

The choke valve 10 comprises a tubular element 11 which defines in its inside a tract of fixed duct 50.

As shown, this tract of fixed duct 50 is in fact a portion of the duct 105 or may be integrated with it. The tubular element 11 can be made for example of an appropriate plastics material

According to the present invention, the choke valve 10 comprises two abutments 12, 26 and one mobile body 14 arranged in the tract of fixed duct 50 and mobile between said abutments 12, 26.

In particular, a first abutment 12 is located upstream of the mobile body 14 and the second abutment 26 downstream of the mobile body 14.

In other words, the movement of the mobile body 14 is limited to the distance between the upstream and downstream abutments 12 and 26.

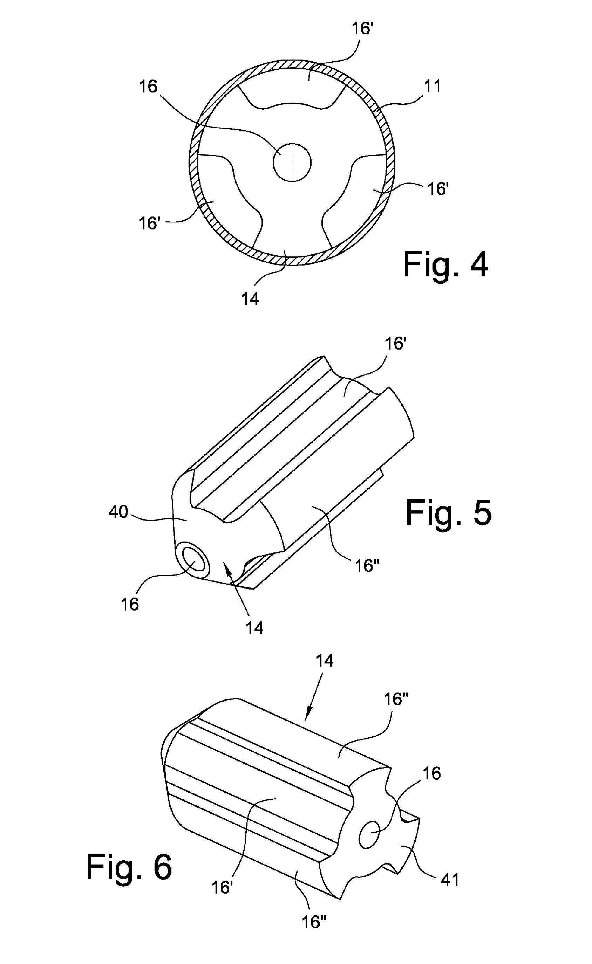

The mobile body 14, shown in Figures 4-6, is cylindrical in shape and comprises a central channel 16 and at least one, preferably three equally spaced, peripheral channels 16' recessed into the lateral profile of body 14.

As will be described in detail, depending on the position of the mobile body 14 in relation to the abutments, the fluid will be able to move through the central channel 16 only, to achieve a smaller flow f, or also through the lateral channels 16' to achieve a greater flow F.

The outer walls 16" of the mobile body 14, where the peripheral channels 16' are not present, are substantially in lateral contact with the inner walls of the duct 50.

The abutments 12 and 26 and the mobile body 14 are configured so as to vary the flow of the filling fluid that passes through the choke valve 10 in order to increase or reduce the sections of passage for the liquid passing through the fixed duct 50.

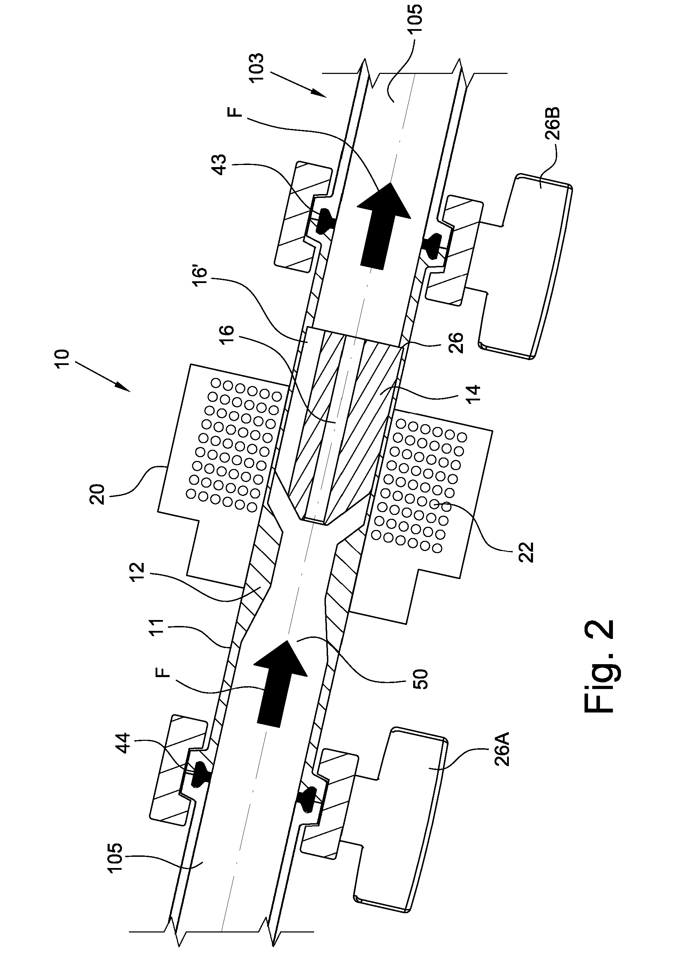

As shown in Figure 2, the maximum flow configuration occurs when the mobile body 14 is resting with its flat rear portion 41 against the downstream abutment 26 with the front portion 40 free so as to allow fluid to pass through all of the channels 16, 16'.

Since the mobile body 14 rests naturally against the downstream abutment 26 both due to the effect of the thrust of the fluid itself and due to gravity, during the operating phases of maximum flow no input of energy is required.

The abutment 26 is merely a circumferential abutment which does not obstruct, or only slightly so, the peripheral channels 16'.

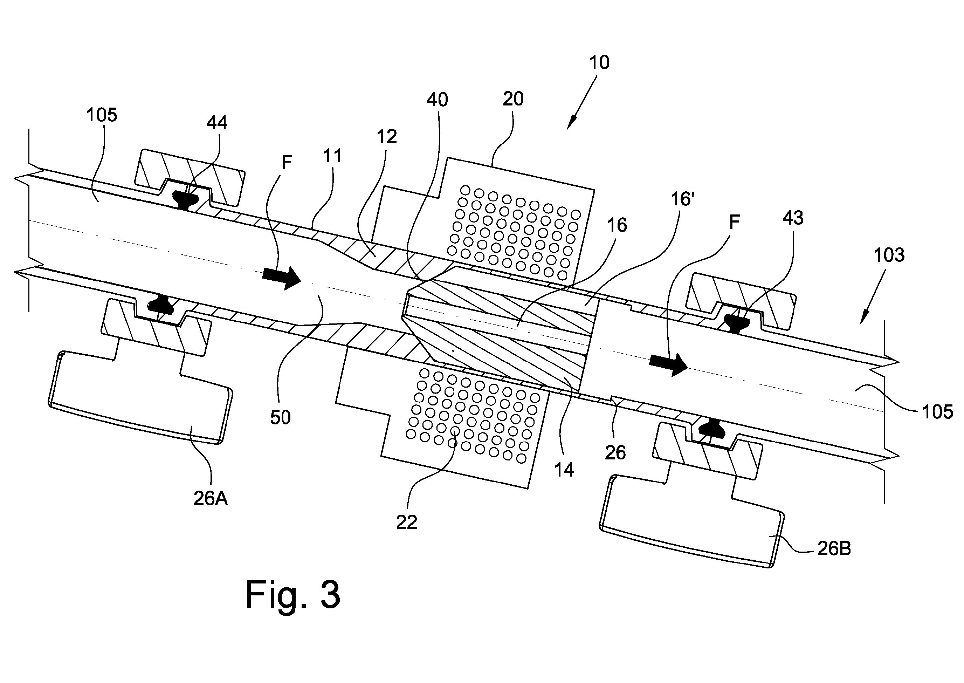

By contrast, as shown in Figure 3, the minimum-flow configuration occurs when the mobile body 14 is in a raised position against the flow with its front portion 40 resting against the upstream abutment 12.

The fact the mobile body 14 is effectively raised to identify the required flow can be easily determined by the mechanical contact with the abutment 12 and can therefore be easily controlled even if the nature of the fluid to be dispensed varies.

Preferably, the upstream abutment 12 comprises a shaped peripheral choke arranged inside the walls of the fixed duct 50.

This peripheral choke 12 is shaped so as to obstruct the peripheral channels 16' leaving only the central channel 16 free for the passage of fluid. In order to guarantee this coupling, both the front portion 40 of the mobile body 14 and the peripheral choke 12 have inclined conjugated surfaces.

In other words, in maximum-flow conditions the fluid passes through all of the channels 16, 16' of the mobile body 14. In minimum flow conditions the fluid passes only through the central channel 16 of the mobile body 14.

As previously stated the downstream abutment 26, unlike the upstream abutment 12, does not create a choke for the fluid passing through but only an end-of-travel rest for the mobile body 14.

Advantageously, this downstream abutment 26 can be obtained from or connected to a seal 43 of one of the sealed connections between the valve 10 and the rest of the filling machine 100.

Similarly, a seal 44 can be provided upstream of the valve 14 obtained from or connected to the upstream abutment 12.

Reference numerals 26A, 26B indicate two knobs for rapidly fitting and removing the valve 10 onto a dispensing duct 103 or other part of the machine.

The valve 10 is provided with a magnetic actuator 20 arranged to move the mobile body 14 between the upstream and downstream abutments 12 and 26.

In order to enable this magnetic control, the mobile body 14 is made of an appropriate ferromagnetic, paramagnetic or diamagnetic material, or of a permanent magnet, and the actuator 20 comprises an electromagnet. Preferably, the electromagnet comprises one or more conducting coils 22 and possibly a core of the appropriate ferromagnetic material.

Advantageously, the electromagnet, and in particular its conducting coils, are arranged on the outside of the fixed duct 50. In this way, the electromagnet 20, remaining well separated from the filling fluid that flows through the fixed duct 50, can remotely activate from outside the casing 11 the choking mobile body 14 housed in the duct 50.

Advantageously, as mentioned above, when the electromagnet or other actuator 20 is deactivated, the valve 10 is arranged so as to be switched into the maximum-flow operating position.

Valve 10 is therefore of the normally-open type enabling considerable energy savings to be made.

The operation of the filling machine 1 and choke valve 10 will now be described.

When the actuator 20 is not active, for example when the coils 22 of the electromagnet have no current flowing through them, the mobile body 14 is pushed downstream by the flow of filling liquid and stops against the abutment 26 in the maximum-flow operating position.

In this operating position the upstream abutment 12 is at the maximum distance from the inlet mouth 18 of the mobile body 14, the corresponding loss of head is minimal and the flow of the filling liquid is at the maximum value permitted by the choke valve 10.

With the choke valve 10 in this first operating condition, the filling machine 100 can advantageously perform the first phase of fast filling of a bottle or other container.

On reaching a predetermined filling level, for example 3/4 of the desired final content, the actuator 20 is activated for example by supplying the conducting coils 22 of the electromagnet with power.

In this way a force acting on the mobile body 14 which then slides axially towards the upstream abutment 12 is generated.

According to a particular embodiment, the upstream abutment 12 can also be mobile so as to speed up the passage from one configuration to the other.

In this operating configuration, the upstream abutment 12 obstructs the peripheral channels 16' of the mobile body 14.

The corresponding limitation of the flow is maximum and the flow of the filling liquid is at the minimum value permitted by the choke valve 10.

With the choke valve 10 in this second operating condition the filling machine 100 can advantageously perform the second phase of slow filling of a bottle or other container, enabling the final level of filling the bottle to be adjusted with greater precision. Lastly, as a result of careful laboratory tests aimed at optimising the device in terms of energy and size, preferably the tubular element 11, or the element that defines inside itself the tract of fixed duct 50 in which the mobile body 14 moves, can be made of a magnetic stainless steel material, such as SAF2205, IMRE, AISI 430 or, in general, any other material sensitive to the magnetic field generated by the coil 20.

In this case, and surprisingly, the Applicant has observed a considerable increase in the "magnetic efficiency" of the limiter, in other words a considerable reduction in the energy required to move the mobile body 14.

This reduction can even reach a value of 1/6 compared to the nominal values if the duct 50 is made of a plastics material or a material insensitive to the magnetic field generated by the coil 20.

Thus, advantageously, if the tubular element 11 is made of magnetic stainless steel the power delivered by the coil 20 can be considerably reduced without compromising the correct operation of the limiter with a consequent reduction in the size of the coil 20 round the duct 50.

We have thus seen that a choke valve to adjust the flow of a filling fluid according to the present invention and a filling machine equipped with this valve fulfil the aims previously outlined.

In fact, the choke valve of the present invention offers an alternative solution to similar valves currently known.

Furthermore, this filling valve does not require a supply of energy in the maximum flow condition and enables the raised position of the mobile body to be controlled and maintained firmly regardless of the nature of the fluid to be dispensed.

The upstream abutment in fact provides a stop indicating that the desired raised position of the mobile body has been reached.

The choke valve to adjust the flow of a filling fluid of the present invention and a filling machine equipped with said valve thus conceived can undergo numerous modifications and variations, all falling within the same inventive concept; furthermore, all of the parts can be replaced by technically equivalent elements. In practice, the materials used, as well as their dimensions, can be of any type to suit technical requirements.

## Claims

1. Choke valve (10) for adjusting the flow of a filling fluid of the type comprising:
- a tubular element (11) which defines a tract of fixed duct (50) in its inside; and
- a mobile body (14) inside said fixed duct (50) between an upstream abutment (12) and a downstream one (26); wherein
- said mobile body (14) and said abutments are configured so that when said mobile body (14) rests against said downstream abutment (26) a first fluid flow occurs and when said mobile body (14) rests against said upstream abutment (12) a second fluid flow occurs;
- said rest position of said mobile body (14) against said downstream abutment (26) being spontaneous; said rest position of said mobile body (14) against said upstream abutment (12) being forced;
- said first fluid flow being greater than said second fluid flow.

2. Valve (10) according to claim 1, **characterized in that** said mobile body (14) is controlled in a magnetic manner.

3. Valve (10) according to claim 2, **characterized in that** it comprises an actuator (20) of the magnetic type arranged outside said tubular element (11), said mobile body (14) being made of a material such that it can be controlled by said actuator (20) of the magnetic type, said tubular element (11) being made of stainless steel magnetic material.

4. Valve (10) according to any of the preceding claims **characterized in that** said mobile body (14) comprises a tubular body which comprises a central through channel (16) and peripheral channels (16') for the passage of said fluid.

5. Valve (10) according to claim 4, **characterized in that** said upstream abutment (12) comprises a peripheral choke configured so that, when said mobile body (14) rests against said upstream abutment (12), said peripheral channels (16') are obstructed and said central channel (16) is free.

6. Valve (10) according to claim 4, **characterized in that** the contact surfaces of said upstream abutment (12) and of said mobile body (14) have inclined conjugated surfaces.

7. Valve (10) according to any of the preceding claims, **characterized in that** said upstream abutment (12) is mobile with respect to said mobile body (14) and to said tubular element (11).

8. Valve (10) according to any of the preceding claims, **characterized in that** said downstream abutment (26) comprises an annular projection which protrudes internally from the wall of said duct (50) configured so that, when said mobile body (14) rests against said downstream abutment (26), said peripheral channels (16') are also free at least in part.

9. Valve (10) according to any of the preceding claims, **characterized in that** it comprises an electromagnetic actuator (20) arranged outside said duct (11) for generating an electromagnetic force acting on said mobile body (14).

10. Filling machine (100) for bottling or anyway filling containers with a filling fluid, comprising:
- a dispensing nozzle (107) arranged to dispense the filling fluid and for directing it into the bottle (B) or another container to be filled;
- means for selectively closing said dispensing nozzle (107); and
- a choke valve (10) for adjusting the liquid flow according to any of the preceding claims, said choke valve (10) being arranged upstream of said dispensing nozzle (107) and being independent from said means for selectively closing said dispensing nozzle (107).
